# EUROPEAN PATENT SPECIFICATION

(11) **EP 0 643 094 B1**
(45) Date of publication and mention of the grant of the patent: **26.05.1999**
(21) Application number: 94202423.3
(22) Date of filing: 24.08.1994
(51) Int. Cl.: C08K 5/00, C09J 153/02

(54) **Block copolymer composition, hot melt adhesive composition containing it and process for the preparation thereof**
Blockcopolymerzusammensetzung, diese enthaltende Heissschmelzkleberzusammensetzung und Verfahren zu deren Herstellung
Composition de copolymère séquencé, composition adhésive fusible à chaud contenant celle-ci et procédé de sa fabrication

(30) Priority: 25.08.1993 EP 93202500
(43) Date of publication of application: 15.03.1995
(73) Proprietor: SHELL INTERNATIONALE RESEARCH MAATSCHAPPIJ B.V., 2596 HR Den Haag (NL)
(72) Inventor: Van Dongen, Arie, NL-1031 CM Amsterdam (NL); Veurink, Jacqueline Margaretha, NL-1031 CM Amsterdam (NL); Van Westrenen, Jeroen, NL-1031 CM Amsterdam (NL)

(56) References cited:
- EP-A- 0 107 616
- US-A- 4 835 200
- DATABASE WPI, Week 05, Derwent Publications Ltd., London, GB, AN 92-038675, Class , JP 3285978 A

## Description

The present invention relates to a block copolymer composition, to a hot melt adhesive composition comprising this block copolymer composition and to a process for preparing such block copolymer composition.

European Patent Application No. 0,479,754 discloses a process for decolourizing vinyl aromatic-conjugated diene copolymers which are obtained by anionic polymerization using an alkali metal initiator, optionally followed by coupling of living copolymer chains by the addition of a coupling agent to the polymerization mixture. Diepoxy compounds were mentioned among many others as suitable coupling agents. As the stabilizer package there was actually used a combination of tris(nonyl-phenyl)phosphite (TNPP) and octadecyl-3-(3',5'-di-tert.butyl-4'-hydroxyphenyl)propionate (IRGANOX 1076, IRGANOX is a trade mark). The decolourisation process involves the addition of a monocarboxylic acid of the formula R-COOH with R representing a group containing 2 to 4 carbon atoms. It will be understood that the use of acids for obtaining colour-stable polymers is undesired from a manufacturing point of view, as the use of acids puts severe demands upon the equipment due to their corrosive nature. Also in view of safety and environmental hazards it is preferred to avoid the use of acids.

From U.S. Patent No. 4,835,200 a color stable, heat resistant hot melt adhesive composition is known comprising a monoalkenyl arene-conjugated diene block copolymer prepared by using a bromide based coupling agent, a tackifying resin, optionally a plasticizing oil and/or a petroleum wax and a specific stabilizer composition. This stabilizer composition essentially consists of four components: (i) a thio compound being 6-(4-hydroxy-3,5-di-t-butylanilino)-2,4-bis-octylthio-1,3,5-triazine, (ii) a phenolic antioxidant, (iii) a tris-(nonylated phenyl)phosphite and (iv) an aliphatic compatible epoxy compound. The stabilizer composition employed contains a relatively large number of components, which may be the result of the use of a bromide containing coupling agent. Apart from the relatively high costs of such extensive stabilizer composition, the use of a coupling agent containing bromide is undesired for environmental reasons. Upon waste disposal, e.g. by incineration, of articles containing the hot melt adhesive composition disclosed in said U.S. patent there is always the risk of toxic bromine compounds releasing into the environment. Hence, there is a need for hot melt adhesive compositions which are free of bromide residues, and of halide residues in general, and which do not require the need of extensive stabilizer compositions for obtaining an adhesive composition having the desired color stability and resistance to heat degradation.

From Japanese Patent Application No. 03/285978 an adhesive composition is known comprising a linear block copolymer of a monoalkenyl aromatic compound and a conjugated diene, a tackifier resin and optionally a softening agent. In addition hereto, small amounts of stabilizers such as antioxidants and UV stabilizers may also be present. Said block copolymer is obtained by first preparing living (i.e. lithium terminated) block copolymer chains in a hydrocarbon solvent and subsequently coupling said living block copolymer chains by means of a diglycidyloxy compound of the general formula 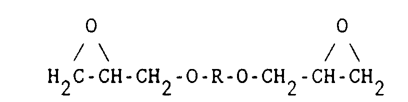 wherein R inter alia may be a group of the general formula 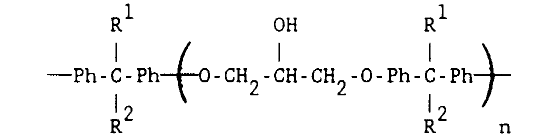 wherein R¹ and R² both represent hydrogen, phenyl or C₁-C₂₀ alkyl, Ph stands for phenylene and n is an integer in the range of from 0 to 10, whereby the n=0 compound occurs in an amount of 95% by weight or more of the total weight of the diglycidyloxy compound. Actually described stabilizers are phosphorus containing antioxidants such as TNPP and UV absorbers of the benzotriazole and benzophenone type. According to said Japanese patent application the best results are achieved when using a mixture of two different diglycidyloxy compounds as the coupling agent. It seems however more easy and effective from a compounding point of view to use only one diglycidyloxy compound as the coupling agent.

It is an object of the present invention to provide block copolymer compositions which have excellent colour stability, shear stability and heat stability and which, when applied in hot melt adhesive compositions, result in the adhesive composition having excellent adhesive properties. It is a further object of the present invention to provide such block copolymer compositions without the use of acids, halides or any other hazardous compounds. Finally, it is a general object of the present invention to provide a process for effectively preparing the beforementioned excellent block copolymer compositions. This inter alia implies that it is an object of the present invention to provide a process wherein coupling efficiencies of 75% or more, preferably 80% or more, can be realized. The coupling efficiency is defined as the percentage of coupled polymer chains relative to the sum of coupled and uncoupled polymer chains.

Accordingly, the present invention relates to a block copolymer composition comprising:
(a) 100 parts by weight of a linear block copolymer comprising two polystyrene endblocks and one poly(conjugated diene) midblock, which block copolymer is obtained by coupling together two lithium terminated diblock copolymer chains, which have been prepared by anionic polymerization in an inert hydrocarbon solvent using a organomonolithium polymerization initiator, by means of a diglycidyloxy coupling agent consisting of at least one diglycidyloxy compound of general formula (I) 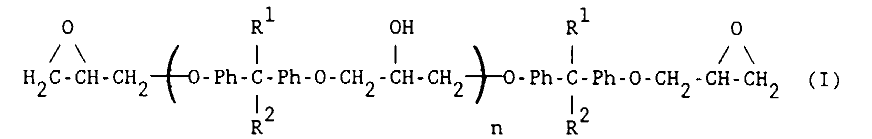 wherein Ph represents a 1,4-phenylene group, R¹ and R² independently represent hydrogen, an alkoxy group or an alkyl group having 1 to 4 carbon atoms and n is an integer of 0, 1 or 2 with the proviso that the diglycidyloxy compound of n=0 consitutes at least 85% by weight of the total weight of the diglycidyloxy coupling agent,
   said linear block copolymer having a styrene content in the range of from 10 to 50% by weight based on the total weight of block copolymer and an apparent molecular weight in the range of from 100,000 to 400,000;
(b) 0.1 to 2 parts by weight of a stabilizer package consisting of:
   (b1) 6-(4-hydroxy-3,5-di-t-butylanilino)-2,4-bis-octylthio-1,3,5-triazine, and
   (b2) a tris-(alkylated phenyl) phosphite,
   in a weight ratio b1/b2 in the range of from 0.5 to 0.1.

The apparent molecular weight is the molecular weight as determined by Gel Permeation Chromatography using polystyrene calibration standards as described in ASTM D 3536.

The styrene content of the coupled linear block copolymer can not be too high, i.e. higher than 50% by weight, as in such a case the block copolymer would be too resinous and hard to be suitably applied in hot melt adhesives. On the other hand, a too low styrene content, i.e. lower than 10% by weight, is also undesired because then the block copolymer would be too soft to handle. It is preferred that the styrene content of the block copolymer is in the range of from 12 to 40% by weight.

The conjugated diene, which is polymerized to form the poly(conjugated diene) midblock, may be selected from butadiene, isoprene, piperylene or mixtures thereof. It is however preferred that the conjugated diene is butadiene or isoprene, of which isoprene is most preferred.

According to the present invention the linear block copolymer to be applied as component (a) is prepared via coupling living, i.e. lithium terminated, styrene-conjugated diene diblock copolymers with a diglycidyloxy coupling agent of general formula (I). Examples of suitable diglycidyloxy coupling agents are those in which:
(a) R¹ and R² both represent hydrogen (bisphenol F type);
(b) R¹ and R² both represent methyl (bisphenol A type); and
(c) R¹ represents hydrogen and R² represents methyl (bisphenol AD type).

A preferred type is the bisphenol A type, i.e. the groups R¹ and R² of formula (I) both represent methyl, whereby the diglycidyloxy compound of n=0 consitutes at least 85% by weight, preferably at least 90% by weight, of the diglycidyloxy coupling agent. It will be understood that the α-glycol content (α-GC) of the diglycidyloxy coupling agent cannot be too high, as this would be detrimental to the coupling efficiency. Accordingly, it is preferred that the α-GC is below 100 millimoles per kilo (mmol/kg) of diglycidyloxy coupling agent, more preferably below 60 mmol/kg. Such α-glycol groups have a structure according to formula (II) and may be formed during the preparation of the diglycidyloxy coupling agent.

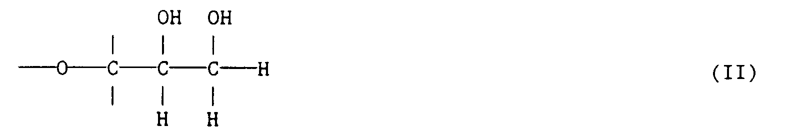

The phenolic triazine compound serving as component (b1) of the the stabilizer package used in the composition of the invention is 6-(4-hydroxy-3,5-di-t-butylanilino)-2,4-bis-octylthio-1,3,5-triazine. It is a UV stabilizer which is commercially available under the trade name IRGANOX 565 (IRGANOX is a trade mark).

With the term tris-(alkylated phenyl) phosphite, which serves as an antioxidant thus preventing the oxidative degradation of the block copolymer composition according to the invention, is meant a group of phosphite derivatives containing three optionally substituted phenyl entities in their molecule, the substituents being selected from alkyl groups containing from 4 to 10 carbon atoms and preferably the nonyl groups. It will be appreciated that in the individual phosphite derivatives the three phenyl nuclei may bear one or two of the same or different substituents and that also mixtures of such phosphite compounds may be used.

Preferred examples of said tri(alkylated phenyl) phosphites are tris(nonyl-phenyl)phosphite (TNPP) or tri(mixed mono- and dinonylated phenyl) phosphite. Examples of commercially available tris-(nonylated phenyl) phosphites are POLYGARD, NAUGARD, ANNULEX TNPP and IRGAPHOS TNPP (POLYGARD, NAUGARD, ANNULEX and IRGAPHOS are trade marks). POLYGARD is a tri(mixed mono- and dinonyl phenyl) phosphite.

More preferred are tris(monononylphenyl) phosphite (TNPP) or tri(mixed mono- and dinonyl phenyl) phosphite.

The weight ratio between the phenolic triazine UV stabilizer on the one hand and the tris-(alkylated phenyl) phosphite antioxidant on the other hand should be within the range of from 0.5 to 0.1 in order to obtain a colour stable and heat resistant block copolymer composition. The best results are achieved when said weight ratio is in the range of from 0.4 to 0.15.

The block copolymer composition according to the present invention is very suitable to be used in hot melt adhesive compositions. Accordingly, the present invention also relates to a hot melt adhesive composition comprising:
(a) 100 parts by weight of the block copolymer composition as described hereinbefore;
(b) 20-400 parts by weight of a tackifying resin; and
(c) 0-200 parts by weight of a softening agent.

Suitable tackifying resins are the conventional materials known in the art. They include, for example, coumarone-indene resins, polyterpene resins, polyindene resins, poly(α-pinene) resins, poly(β-pinene) resins and modified as well as unmodified rosins. Resins based on styrene or substituted styrenes, such as α-methylstyrene, may also be used. The softening agent also may be any material known to be suitable as a softening agent. Examples are paraffinic oils, naphthenic oils and mixtures thereof as well as mineral oils.

The present invention also relates to a process for preparing the block copolymer compositions described hereinbefore, which process comprises the steps of:
(1) preparing lithium terminated styrene-conjugated diene diblock copolymer chains ("living" chains) in an inert hydrocarbon solvent using an organolithium polymerization initiator;
(2) coupling these diblock copolymer chains by means of a diglycidyloxy coupling agent consisting of at least one diglycidyloxy compound of general formula (I) 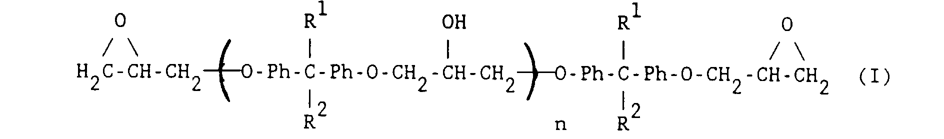 wherein Ph represents a 1,4-phenylene group, R¹ and R² independently represent hydrogen, an alkoxy group or an alkyl group having 1 to 4 carbon atoms and n is an integer of 0, 1 or 2 with the proviso that the diglycidyloxy compound of n=0 consitutes at least 85% by weight of the total weight of the diglycidyloxy coupling agent;
(3) adding the stabilizer package consisting of 6-(4-hydroxy-3,5-di-t-butylanilino)-2,4-bis-octylthio-1,3,5-triazine and a tris-(nonylated phenyl) phosphite in a weight ratio in the range of from 0.5 to 0.1 via
   (i) adding a solution of the stabilizer package dissolved in an inert hydrocarbon solvent, preferably the same as used in the polymerization; or
   (ii) separately adding the components of the stabilizer package as solutions in an inert hydrocarbon solvent, preferably the same as used in the polymerization, whereby the solution of the tris-(nonylated phenyl) phosphite is added first; and
(4) recovering the block copolymer composition.

The preferred diglycidyloxy coupling agent is the diglycidyloxy compound of formula (I), wherein R¹ and R² of formula (I) both represent methyl and wherein the diglycidyloxy compound of n=0 consitutes at least 85% by weight, preferably at least 90% by weight, of the diglycidyloxy coupling agent. Suitable diglycidyloxy compounds, which are commercially available, are those of the EPIKOTE 828 series, the EPIKOTE 827 series and the EPON series (EPIKOTE and EPON are trade marks). Specific examples are EPIKOTE 828 EL, EPON 825, EPON 827 and EPON 828.

In a preferred embodiment of the process according to the present invention, the diglycidyloxy coupling agent is preheated before being added to the living diblock copolymer solution to reduce the water content. This preheating conveniently is carried out for a period of 5-20 hours at a temperature of 100-150 °C. This preheating may increase the coupling efficiency (CE), which is defined as the percentage of living diblock copolymer chains being coupled relative to the total number of living diblock copolymer chains being present just before coupling. A high CE (80% or higher) is necessary in order to finally obtain a block copolymer composition having the desired properties.

The inert hydrocarbon solvent may be any solvent known in the art to be suitably applied as a polymerization solvent. Examples of suitable inert hydrocarbon solvents are cyclic aliphatic hydrocarbons such as cyclohexane and cyclopentane, and mixtures thereof with linear or branched aliphatic hydrocarbons such as n-hexane and isopentane. Particularly suitable are cyclohexane, cyclohexane/n-hexane mixtures, cyclohexane/isopentane/n-hexane mixtures, cyclopentane and cyclopentane/isopentane mixtures. Cyclohexane/isopentane/n-hexane mixtures, cyclohexane and cyclopentane are preferred.

The organolithium initiator may be any organic lithium compound which is commonly known to act as an initiator in polymerization reactions. A preferred class of organolithium compound are alkyl lithium compounds, wherein the alkyl group may be a linear alkyl group or a cycloalkyl group. Preferred alkyl lithium compounds are n-butyl lithium and sec-butyl lithium, with sec-butyl lithium being most preferred.

The addition of the stabilizer package (step (3)) most suitably is carried out in the absence of oxygen in order to allow the stabilizer package to have an optimum effect. This is most conveniently realized by purging the reaction vessel with nitrogen before the start of the polymerization reaction.

The reactions at the different stages of the process may be carried out at equal or different temperatures within the range of from 30 °C to 120 °C, preferably 40 °C to 90 °C.

The last step of the process, i.e. the recovery of the block copolymer, may be performed by any conventional recovery technique. Preferred techniques are flashing or water coagulation, followed by drying the polymer at a temperature between 30 and 100 °C. Water coagulation is preferred. In the event water coagulation is used, it is preferred to use water which is free of oxygen. Such oxygen-free water may for instance be obtained by degassing water under vacuum.

The invention is further illustrated by the following examples.

### Example 1

A SIS (styrene-isoprene-styrene) block copolymer was prepared as follows.

To a 30 l reactor 19.7 l of cyclohexane was added, which was stripped for 30 minutes with nitrogen. After addition of 436 g of styrene, the reactor content was titrated at 50 °C with a 3% wt solution of sec-butyllithium (s-BuLi) in cyclohexane to scavenge reactive impurities. Hereafter, 40 mmol s-BuLi was added and the temperature was maintained at 50 °C. After 30 minutes the living polystyrenyl block had been formed. Subsequently, 2125 g of isoprene was added within 25 minutes. The temperature was raised to 60 °C and this was maintained for 50 minutes. Hereafter, EPIKOTE 828 EL (2,2-bis(glycidyloxyphenyl)-propane) in 5 gram THF was added in such amount that the EGC (Epoxy Group Content) of the coupling agent in millimoles corresponded with 40 mmol of living diblock copolymer chains. The reaction mixture was kept at 60 °C for 50 minutes.

| Relevant data as to EPIKOTE 828 EL: | |
|---|---|
| α-GC | 45 mmol/kg |
| n₁/n₀ | 4.3 mole %, corresponding with a content of the n=0 compound of 92% by weight |
| EGC | 5650 mmol/kg |
| Solution viscosity | 8.900 Pa.s |

Analysis with Gel Permeation Chromatography using polystyrene calibration standards (ASTM D 3536) revealed that the coupling efficiency was 84% and that the apparent molecular weight of the SIS block copolymer was 171,000. The real molecular weight of the polystyrene endblocks turned out to be 10,900.

Polystyrene content of the SIS block copolymer was determined according to ASTM D 3314 and was 17% by weight.

### Example 2

A sample of 1800 g of the polymer solution obtained in Example 1 was taken and transferred to a 3 l reactor under nitrogen, after which a cyclohexane solution containing 0.4% wt of TNPP and 0.1% wt of IRGANOX 565 was added, said weight percentages being based on the total weight of block copolymer. During the addition the solution was kept at 60 °C whilst stirring.

The solvent was subsequently removed by batch wise water coagulation using batches initially containing 2 l degassed water, followed by drying the polymer in an oven at 40 °C for 5-6 hours.

The results are listed in Table I.

The MWR (Molecular Weight Retention, expressed in %) of the polymer is determined by the calculating the ratio between the square root of the quotient of the solution viscosity of the polymer after and before testing in a Brabender mixer at 160 °C in the presence of air. It is accordingly a measure for the stability of the block copolymer composition.

Solution viscosities are measured at 25 °C in a 25% by weight toluene solution.

The testing in a Brabender mixer is performed as follows. The pure polymer material is added in a cup. This cup has a temperature of 140 °C. The cup is filled with polymer for 4/5, leaving 1/5 of open space containing air. The blades of the mixer are set at 50 rpm (rotations per minute). Due to shear, the temperature of the polymer mass of the sample increases to 160 °C. The test run is performed for 30 minutes. Due to the constant speed of the blades higher viscosity polymers receive more shear and are prone to degrade more than low viscosity ones. Therefore, only polymers with comparable viscosities can be compared with each other.

The colour is visually determined after the Brabender testing.

### Comparative Example 1

The procedure of Example 2 was repeated, except that prior to the addition of the TNPP/IRGANOX 565 solution in cyclohexane 1.0 equivalent -relative to the amount of sec-butyllithium used for obtaining the polymer present in the sample- of benzoic acid was added.

The results are listed in Table I.

### Comparative Example 2

The procedure of Example 2 was repeated, except that after the addition of the TNPP/IRGANOX 565 solution in cyclohexane 1.0 equivalent -relative to the amount of sec-butyllithium used for obtaining the polymer present in the sample- of benzoic acid was added.

The results are listed in Table I.

### Comparative Example 3

The procedure of Comparative Example 1 was repeated, except that instead of benzoic acid, stearic acid was used.

The results are listed in Table I.

### Example 3

A sample of 1800 g of the polymer solution obtained in Example 1 was taken and transferred to a 3 l reactor under nitrogen. Then, a cyclohexane solution containing 0.4% wt of TNPP was added whilst stirring and stirring was continued for 15 minutes. A 0.1% wt of IRGANOX 565 in cyclohexane was subsequently added. The weight percentages of TNPP and IRGANOX 565 are based on the total weight of block copolymer. During both additions the solution was kept at 60 °C. The polymer was subsequently recovered by the procedure described in Example 2.

The results are listed in Table I.

### Comparative Example 4

The procedure of Example 3 was repeated, except that the IRGANOX 565 solution was added first, after which stirring was continued for 15 minutes before the TNPP solution was added.

The results are listed in Table I.

### Comparative Examples 5-8

The procedure of Example 2 was repeated, except that different stabilizer packages were used according to Table II. The amounts are expressed in % by weight based on total weight of polymer.

**TABLE II**

| Different stabilizer packages | |
|---|---|
| Comp.Ex. | Stabilizer package |
| 5 | 0.1 IRGANOX 1010 / 0.4 TNPP |
| 6 | 0.1 IRGANOX 1076 / 0.4 TNPP |
| 7 | 0.6 BHT / 0.4 TNPP |
| 8 | 0.1 SUMILIZER GM / 0.4 TNPP |
| BHT means 3,5-bis-(tert.butyl)-4-hydroxytoluene. SUMILIZER GM (2-tert.butyl-6-(3-tert.butyl-2-hydroxy-5-methylbenzyl)-4-methylphenyl acrylate) is a stabilizer available from Sumitomo Chemical Co., Ltd. (SUMILIZER is a trade mark). | |

The results are listed in Table I.

**TABLE I**

| MWR and colour stability | | |
|---|---|---|
| Experiment | MWR (%) | Colour |
| Ex. 2 | 63 | off white |
| Comp.Ex. 1 | 58 | off white |
| Comp.Ex. 2 | 58 | off white |
| Comp.Ex. 3 | 57 | off white |
| Ex. 3 | 64 | off white |
| Comp.Ex. 4 | 57 | yellow¹⁾ |
| Comp.Ex. 5 | 56 | yellow |
| Comp.Ex. 6 | 56 | slightly yellow |
| Comp.Ex. 7 | 61 | yellow |
| Comp.Ex. 8 | 49 | slightly yellow |

| | | |
|---|---|---|
| ¹⁾ This sample was already coloured before the Brabender testing | | |

From Table I it can be seen that the compositions according to the invention exhibit an excellent combination of stability and colour without the need of an acid.

## Claims

1. A block copolymer composition comprising:
(a) 100 parts by weight of a linear block copolymer comprising two polystyrene endblocks and one poly(conjugated diene) midblock, which block copolymer is obtained by coupling together two lithium terminated diblock copolymer chains, which have been prepared by anionic polymerization in an inert hydrocarbon solvent using a organomonolithium polymerization initiator, by means of a diglycidyloxy coupling agent consisting of at least one diglycidyloxy compound of general formula (I) 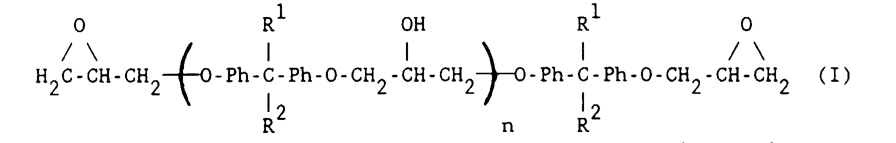 wherein Ph represents a 1,4-phenylene group, R¹ and R² independently represent hydrogen, an alkoxy group or an alkyl group having 1 to 4 carbon atoms and n is an integer of 0, 1 or 2 with the proviso that the diglycidyloxy compound of n=0 consitutes at least 85% by weight of the total weight of the diglycidyloxy coupling agent,
said linear block copolymer having a styrene content in the range of from 10 to 50% by weight based on the total weight of block copolymer and an apparent molecular weight in the range of from 100,000 to 400,000;
(b) 0.1 to 2 parts by weight of a stabilizer package consisting of:
(b1) 6-(4-hydroxy-3,5-di-t-butylanilino)-2,4-bis-octylthio-1,3,5-triazine, and
(b2) a tris-(alkylated phenyl) phosphite,
in a weight ratio b1/b2 in the range of from 0.5 to 0.1.

2. A composition according to claim 1, wherein the styrene content of the linear block copolymer is in the range of from 12 to 40% by weight.

3. A composition according to claim 1 or 2, wherein the conjugated diene is butadiene or isoprene.

4. A composition according to claim 3, wherein the conjugated diene is isoprene.

5. A composition according to any one of claims 1 to 4, wherein R¹ and R² of formula (I) both represent methyl and wherein the diglycidyloxy compound of n=0 consitutes at least 90% by weight of the diglycidyloxy coupling agent.

6. A composition according to any one of claims 1 to 5, wherein the weight ratio b1/b2 is in the range of from 0.4 to 0.15.

7. A composition according to claim 1, wherein the component b(2) is tris(nonylated phenyl) phosphite.

8. A hot melt adhesive composition comprising:
(a) 100 parts by weight of the block copolymer composition according to any one of claims 1 to 6;
(b) 20-400 parts by weight of a tackifying resin; and
(c) 0-200 parts by weight of a softening agent.

9. A process for the preparation of a block copolymer composition as claimed in any one of claims 1 to 7, which process comprises the steps of:
(1) preparing lithium terminated styrene-conjugated diene diblock copolymer chains ("living" chains) in an inert hydrocarbon solvent using an organomonolithium polymerization initiator;
(2) coupling these diblock copolymer chains by means of a diglycidyloxy coupling agent consisting of at least one diglycidyloxy compound of general formula (I) 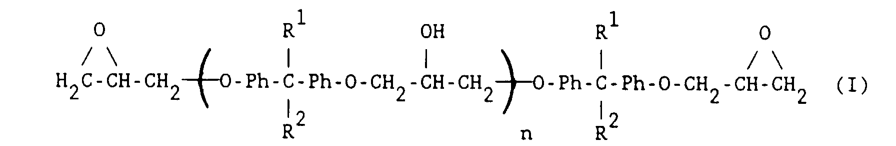 wherein Ph represents a 1,4-phenylene group, R¹ and R² independently represent hydrogen, an alkoxy group or an alkyl group having 1 to 4 carbon atoms and n is an integer of 0, 1 or 2 with the proviso that the diglycidyloxy compound of n=0 consitutes at least 85% by weight of the total weight of the diglycidyloxy coupling agent;
(3) adding the stabilizer package consisting of 6-(4-hydroxy-3,5-di-t-butylanilino)-2,4-bis-octylthiol-1,3,5-triazine and a tris-(alkylated phenyl) phosphite in a weight ratio in the range of from 0.5 to 0.1 via
(i) adding a solution of the stabilizer package dissolved in an inert hydrocarbon solvent, preferably the same as used in the polymerization; or
(ii) separately adding the components of the stabilizer package as solutions in an inert hydrocarbon solvent, preferably the same as used in the polymerization, whereby the solution of the tris-(alkylated phenyl) phosphite is added first; and
(4) recovering the block copolymer composition.

10. A process according to claim 9, wherein R¹ and R² of formula (I) both represent methyl and wherein the diglycidyloxy compound of n=0 consitutes at least 90% by weight of the diglycidyloxy coupling agent.

11. A process according to claim 9 or 10, wherein the diglycidyloxy coupling agent is preheated.

12. A process according to any one of claims 9 to 11, wherein the different steps of the process are conducted at temperatures in the range of from 40 to 90 °C.

## Patentansprüche

1. Blockcopolymerzusammensetzung, umfassend:
(a) 100 Gewichtsteile eines linearen Blockcopolymers, das zwei Polystyrolendblöcke und einen Poly(konjugiertes Dien)-Mittelblock umfaßt, welches Blockcopolymer durch Zusammenkuppeln von zwei Lithium-terminierten Zweiblockcopolymerketten erhalten wird, die durch anionische Polymerisation in einem inerten Kohlenwasserstofflösungsmittel unter Anwendung eines Organolithium-Polymerisationsinitiators durch ein Diglycidyloxykupplungsmittel hergestellt worden sind, das aus wenigstens einer Diglycidyloxyverbindung mit der allgemeinen Formel (I) 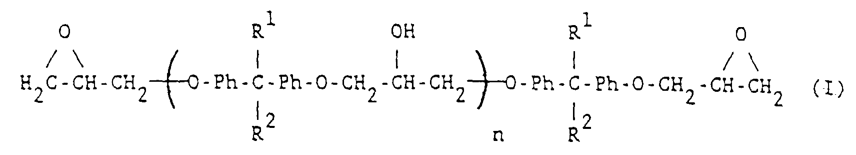 besteht, worin Ph eine 1,4-Phenylengruppe darstellt, R¹ und R² unabhängig voneinander für Wasserstoff, eine Alkoxygruppe oder eine Alkylgruppe mit 1 bis 4 Kohlenstoffatomen stehen und n eine ganze Zahl mit dem Wert 0, 1 oder 2 bedeutet, mit der Maßgabe, daß die Diglycidyloxyverbindung mit n=0 wenigstens 85 Gew.-% des Gesamtgewichtes des Diglycidyloxykupplungsmittels ausmacht,
wobei das lineare Blockcopolymer einen Styrolgehalt im Bereich von 10 bis 50 Gew.-%, bezogen auf das Gesamtgewicht des Blockcopolymers, und ein scheinbares Molekulargewicht im Bereich von 100.000 bis 400.000 aufweist;
(b) 0,1 bis 2 Gewichtsteile eines Stabilisatorpakets, bestehend aus:
(b1) 6-(4-Hydroxy-3,5-di-t-butylanilino)-2,4-bis-octylthio-1,3,5-triazin und
(b2) einem Tris-(alkyliertes Phenyl)phosphit;
in einem Gewichtsverhältnis b1/b2 im Bereich von 0,5 bis 0,1.

2. Zusammensetzung nach Anspruch 1, worin der Styrolgehalt des linearen Blockcopolymers in dem Bereich von 12 bis 40 Gew.-% liegt.

3. Zusammensetzung nach Anspruch 1 oder 2, worin das konjugierte Dien Butadien oder Isopren ist.

4. Zusammensetzung nach Anspruch 3, worin das konjugierte Dien Isopren ist.

5. Zusammensetzung nach einem der Ansprüche 1 bis 4, worin R¹ und R² von Formel (I) beide für Methyl stehen und worin die Diglycidylverbindung mit n=0 wenigstens 90 Gew.-% des Diglycidyloxykupplungsmittels ausmacht.

6. Zusammensetzung nach einem der Ansprüche 1 bis 5, worin das Gewichtsverhältnis bl/b2 in dem Bereich von 0,4 bis 0,15 liegt.

7. Zusammensetzung nach Anspruch 1, worin die Komponente (b2) Tris(nonyliertes Phenyl)phosphit ist.

8. Heißschmelzkleberzusammensetzung, umfassend:
(a) 100 Gewichtsteile der Blockcopolymerzusammensetzung nach einem der Ansprüche 1 bis 6;
(b) 20 bis 400 Gewichtsteile eines klebrigmachenden Harzes; und
(c) 0 bis 200 Gewichtsteile eines weichmachenden Mittels.

9. Verfahren zur Herstellung einer Blockcopolymerzusammensetzung nach einem der Ansprüche 1 bis 7, welches Verfahren die folgenden Stufen umfaßt:
(1) Herstellen von Lithium-terminierten Styrol-konjugiertes Dien-Zweiblockcopolymerketten ("lebende" Ketten) in einem inerten Kohlenwasserstofflösungsmittel unter Anwendung eines Organolithium-Polymerisationsinitiators;
(2) Kuppeln dieser Zweiblockcopolymerketten mit einem Diglycidyloxykupplungsmittel, das aus wenigstens einer Diglycidyloxyverbingung mit der allgemeinen Formel (I) 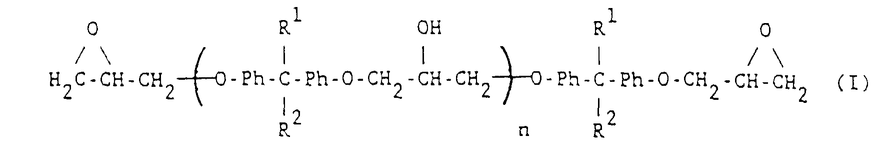 besteht, worin Ph eine 1,4-Phenylengruppe darstellt, R¹ und R² unabhängig voneinander für Wasserstoff, eine Alkoxygruppe oder eine Alkylgruppe mit 1 bis 4 Kohlenstoffatomen stehen und n eine ganze Zahl mit dem Wert 0, 1 oder 2 bedeutet, mit der Maßgabe, daß die Diglycidyloxyverbindung mit n=0 wenigstens 85 Gew.-% des Gesamtgewichtes des Diglycidyloxykupplungsmittels ausmacht;
(3) Zusetzen des Stabilisatorpakets, bestehend aus 6-(4-Hydroxy-3,5-di-t-butylanilino)-2,4-bis-octylthio-1,3,5-triazin und einem Tris(alkyliertes Phenyl)phosphit in einem Gewichtsverhältnis von 0,5 bis 0,1 durch
(i) Zusetzen einer Lösung des in einem inerten Kohlenwasserstofflösungsmittel aufgelösten Stabilisatorpakets, vorzugsweise in dem gleichen Lösungsmittel, wie es in der Polymerisation verwendet wurde; oder
(ii) getrenntes Zusetzen der Komponenten des Stabilisatorpakets als Lösungen in einem inerten Kohlenwasserstofflösungsmittel, vorzugsweise in dem gleichen, wie es in der Polymerisation verwendet wurde, wobei die Lösung des Tris(alkyliertes Phenyl)phosphits als erste zugesetzt wird; und
(4) Gewinnen der Blockcopolymerzusammensetzung.

10. Verfahren nach Anspruch 9, worin R¹ und R² von Formel(I) beide für Methyl stehen und worin die Diglycidloxyverbindung mit n=0 wenigstens 90 Gew.-% des Diglycidloxykupplungsmittels ausmacht.

11. Verfahren nach Anspruch 9 oder 10, worin das Diglycidloxykupplungsmittel vorerhitzt wird.

12. Verfahren nach einem der Ansprüche 9 bis 11, worin die verschiedenen Stufen des Verfahrens bei Temperaturen im Bereich von 40 bis 90°C ausgeführt werden.

## Revendications

1. Composition de copolymère bloc comprenant :
(a) 100 parties en poids d'un copolymère bloc linéaire comprenant deux blocs d'extrémité de polystyrène et un bloc central de poly(diène conjugué), lequel copolymère bloc est obtenu en couplant ensemble deux chaînes de copolymère dibloc à terminaison de lithium, qui ont été préparées par une polymérisation anionique dans un solvant hydrocarboné inerte utilisant un initiateur de polymérisation organo-monolithique, au moyen d'un agent de couplage diglycidyloxy se composant d'au moins un composé diglycidyloxy de formule générale (I) : 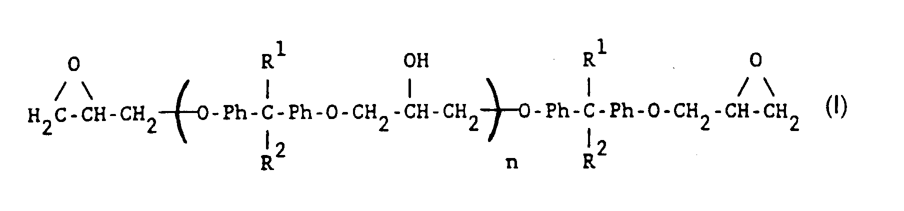 dans laquelle Ph représente un groupe 1,4-phénylène, R¹ et R² représentent indépendamment de l'hydrogène, un groupe alcoxy ou un groupe alkyle comportant 1 à 4 atomes de carbone et n est un nombre entier de 0, 1 ou 2, à la condition que le composé diglycidyloxy de n=0 constitue au moins 85% en poids du poids total de l'agent de couplage diglycidyloxy,
ledit copolymère bloc linéaire ayant une teneur en styrène dans la gamme de 10 à 50% en poids par rapport au poids total de copolymère bloc et un poids moléculaire apparent dans la gamme de 100.000 à 400.000;
(b) 0,1 à 2 parties en poids d'un ensemble de stabilisation formé de:
(b1) 6-(4-hydroxy-3,5-di-t-butylanilino)-2,4-bis-octylthio-1,3,5-triazine, et
(b2) d'un tris(phényl alkylé)phosphite,
dans un rapport en poids b1/b2 dans la gamme de 0,5 à 0,1.

2. Composition suivant la revendication 1, dans laquelle la teneur en styrène du copolymère bloc linéaire se situe dans la gamme de 12 à 40% en poids.

3. Composition suivant l'une ou l'autre des revendications 1 et 2, dans laquelle le diène conjugué est du butadiène ou de l'isoprène.

4. Composition suivant la revendication 3, dans laquelle le diène conjugué est de l'isoprène.

5. Composition suivant l'une quelconque des revendications 1 à 4, dans laquelle R¹ et R² de la formule (I) représentent tous deux du méthyle et dans laquelle le composé diglycidyloxy de n=0 constitue au moins 90% en poids de l'agent de couplage diglycidyloxy.

6. Composition suivant l'une quelconque des revendications 1 à 5, dans laquelle le rapport en poids b1/b2 se situe dans la gamme de 0,4 à 0,15.

7. Composition suivant la revendication 1, dans laquelle le composant b(2) est du tris(phényl nonylé) phosphite.

8. Composition adhésive thermofusible comprenant :
(a) 100 parties en poids de la composition de copolymère bloc suivant l'une quelconque des revendications 1 à 6;
(b) 20-400 parties en poids d'une résine assurant un collage; et
(c) 0-200 parties en poids d'un agent plastifiant.

9. Procédé de préparation d'une composition de copolymère bloc suivant l'une quelconque des revendications 1 à 7, lequel procédé comprend les étapes suivantes :
(1) la préparation de chaînes de copolymère dibloc de styrène-diène conjugué à terminaison de lithium (chaînes "vivantes") dans un solvant hydrocarboné inerte utilisant un initiateur de polymérisation organolithique;
(2) le couplage de ces chaînes de copolymère dibloc au moyen d'un agent de couplage diglycidyloxy constitué d'au moins un composé diglycidyloxy de formule générale (I) : 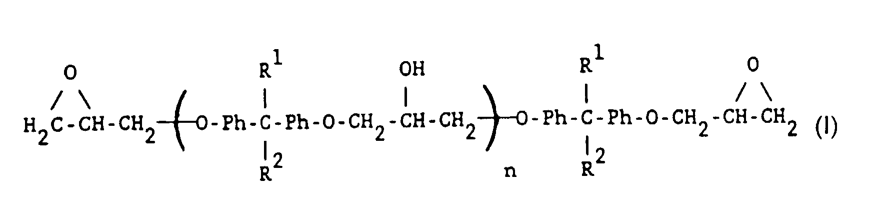 dans laquelle Ph représente un groupe 1,4-phénylène, R¹ et R² représentent indépendamment de l'hydrogène, un groupe alcoxy ou un groupe alkyle comportant 1 à 4 atomes de carbone et n est un nombre entier de 0, 1 ou 2, à la condition que le composé diglycidyloxy de n=0 constitue au moins 85% en poids du poids total de l'agent de couplage diglycidyloxy;
(3) l'addition de l'ensemble de stabilisation formé de 6-(4-hydroxy-3,5-di-t-butylanilino)-2 ,4-bis-octylthio-1,3,5-triazine et d'un tris-(phényl alkylé)phosphite dans un rapport en poids dans la gamme de 0,5 à 0,1 via
(i) l'addition d'une solution de l'ensemble de stabilisation dissous dans un solvant hydrocarboné inerte, avantageusement le même que celui utilisé dans la polymérisation; ou
(ii) l'addition séparée des composants de l'ensemble de stabilisation sous la forme de solutions dans un solvant hydrocarboné inerte, avantageusement le même que celui utilisé dans la polymérisation, de sorte que la solution du tris(phényl alkylé)phosphite est d'abord ajoutée; et
(4) la récupération de la composition de copolymère bloc.

10. Procédé suivant la revendication 9, dans lequel R¹ et R² de la formule (I) représentent tous deux du méthyle et dans lequel le composé diglycidyloxy de n=0 constitue au moins 90% en poids de l'agent de couplage diglycidyloxy.

11. Procédé suivant l'une ou l'autre des revendications 9 et 10, dans lequel l'agent de couplage diglycidyloxy est préchauffé.

12. Procédé suivant l'une quelconque des revendications 9 à 11, dans lequel les différentes étapes du procédé sont réalisées à des températures dans l'intervalle de 40 à 90°C.
